# EUROPÄISCHE PATENTSCHRIFT

(11) **EP 3 729 605 B1**
(45) Veröffentlichungstag und Bekanntmachung des Hinweises auf die Patenterteilung: **08.11.2023**
(21) Anmeldenummer: 18811512.5
(22) Anmeldetag: 28.11.2018
(51) Int. Cl.: F04D 13/06, H02K 5/167, H02K 5/128

(54) **NASSLÄUFER-PUMPE**
WET-ROTOR PUMP
POMPE À ROTOR HUMIDE

(30) Priorität: 19.12.2017 DE 102017223256
(43) Veröffentlichungstag der Anmeldung: 28.10.2020
(73) Patentinhaber: BSH Hausgeräte GmbH, 81739 München (DE)
(72) Erfinder: KALAVSKY, Michal, 04023 Kosice (SK)
(86) Internationale Anmeldenummer: PCT/EP2018/082829
(87) Internationale Veröffentlichungsnummer: WO 2019/120912

(56) Entgegenhaltungen:
- EP-A2- 2 908 407
- JP-A- 2012 120 395
- US-A1- 2011 027 112

## Beschreibung

Die Erfindung betrifft eine Nassläufer-Pumpe mit einem Pumpenrad und mit einem elektrischen Antriebsmotor gemäss dem Oberbegriff des Anspruchs 1.

Die EP 2 908 407 A2 beschreibt einen elektrischen Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und mehrere um wenigstens eine Mantelfläche des Magnetträgers verteilt angeordnete Permanentmagnete aufweist, die jeweils wenigstens eine Außenoberfläche aufweisen und die mittels eines durch Umspritzen des Magnetträgers hergestellten Kunststoffkörpers an dem Magnetträger befestigt sind, wobei die Permanentmagnete an ihren dem Ringspalt zugewandten Außenoberflächen durch den Kunststoffkörper derart form- und/oder kraftschlüssig gehalten sind, dass zumindest ein Teil dieser Außenoberflächen freiliegt.

Aus US 2011/0027112 A1 ist eine Nassläufer-Pumpe mit einem Pumpenrad und mit einem elektrischen Antriebsmotor gemäss Oberbegriff des Anspruchs 1 bekannt.

Die Aufgabe der Erfindung ist es, eine Nassläufer-Pumpe, insbesondere eines Haushaltsgerät mit insbesondere einem bürstenlosen Gleichstrommotor zu schaffen, dessen Permanentmagnetenrotor verbessert ist.

Die Aufgabe der Erfindung wird gelöst durch eine Nassläufer-Pumpe mit einem Pumpenrad und mit einem elektrischen Antriebsmotor gemäss Anspruch 1.

Unter einer Nassläufer-Pumpe kann im Rahmen der Erfindung ein Pumpenaggregat verstanden werden, welches neben einem Pumpenrad und einem Pumpengehäuse außerdem einen elektrischen Antriebsmotor, insbesondere einen bürstenlosen Gleichstrommotor, umfasst, dessen Permanentmagnetenrotor sich in dem flüssigen Fördermedium dreht. Das Fördermedium ist dabei die von dem Pumpenrad der Nassläufer-Pumpe geförderte Flüssigkeit. Beispielsweise im Falle einer Geschirrspülmaschine als Haushaltsgerät kann das Fördermedium die sogenannte Spülflotte sein. Beispielsweise im Falle einer Waschmaschine als Haushaltsgerät kann das Fördermedium die sogenannte Waschlauge sein. Bei der Nassläufer-Pumpe wird demgemäß der sich in dem Fördermedium drehende Permanentmagnetenrotor mittels der Pumpenkammerwand flüssigkeitsdicht von dem Stator des elektrischen Antriebsmotors getrennt. Der Stator befindet sich insoweit in einem trockenen Bereich der Nassläufer-Pumpe, also hydraulisch getrennt von dem Nassraum, in dem der Permanentmagnetenrotor dreht.

Der Stator weist eine vorgegebene Anzahl von Polschuhen, d.h. Statorpole auf. Der Stator kann beispielsweise neun Polschuhe aufweisen. Der Permanentmagnetenrotor weist eine zugeordnete Anzahl von permanentmagnetischen Rotorpolen auf. Die Anzahl der Rotorpole muss nicht gleich der Anzahl der Statorpole sein. Im Falle von neun Statorpolen können am Permanentmagnetenrotor beispielsweise sechs Rotorpole vorgesehen sein. Unabhängig der Anzahl von Rotorpolen kann der Permanentmagnetenrotor einen einzigen, zwei, drei oder mehrere Einzelpermanentmagnete aufweisen. Jeder Einzelpermanentmagnet kann dabei einen einzigen Rotorpol bilden. Alternativ kann jeder Einzelpermanentmagnet mehrere, beispielsweise zwei oder drei Rotorpole aufweisen. In der äußersten Weiterbildung kann der Permanentmagnetenrotor nur einen einzigen Einzelpermanentmagnet in Form eines Ringpermanentmagneten aufweisen, wobei dieser einzige Ringpermanentmagnet eine zum Stator passende Anzahl von Rotorpolen aufweist.

Indem der Permanentmagnetenträger topfförmig ausgebildet ist mit einem an dem zweiten axialen Endabschnitt der Motorwelle befestigten, sich zumindest im Wesentlichen radial zur Motorwelle erstreckenden Topfbodenabschnitt und einen sich am Außenumfang des Topfbodenabschnitts unmittelbar anschließenden, die Motorwelle koaxial umgebenden Kreiszylinderwandabschnitt, wobei der Topfbodenabschnitt und der Kreiszylinderwandabschnitt eine zumindest annähernd gleiche oder genau gleiche Wanddicke aufweisen, kann ein besonders kurzer Permanentmagnetenträger geschaffen werden, was einen besonders kompakten und folglich stabilen Aufbau des elektrischen Antriebsmotors und damit einen besonders kompakten und folglich stabilen Aufbau der gesamten Nassläufer-Pumpe ermöglicht, was insbesondere die Laufruhe des elektrischen Antriebsmotors und auch der gesamten Nassläufer-Pumpe verbessert. Aufgrund der sehr kurzen Bauweise des Permanentmagnetenträgers kann der Permanentmagnetenrotor besonders genau gewuchtet werden und ggf. geringfügige Unwuchten können sich ggf. nicht so stark auswirken. Insgesamt kann daher die Bauhöhe des elektrischen Antriebsmotors und/oder der Nassläufer-Pumpe sehr gering gehalten werden, so dass nur ein kleiner Bauraum für den elektrischen Antriebsmotor benötigt wird.

Das Merkmal, wonach der Topfbodenabschnitt und der Kreiszylinderwandabschnitt eine genau gleiche Wanddicke aufweisen, oder wonach eine Abweichung der Wanddicken an dem Topfbodenabschnitt und an dem Kreiszylinderabschnitt bis zu einer doppelten Wanddicke beträgt, bedeutet zunächst, dass der Kreiszylinderwandabschnitt über seine axiale Erstreckung einen zumindest im Wesentlichen gleichmäßigen oder exakt gleichmäßigen Durchmesser aufweist und der Topfbodenabschnitt zumindest im Wesentlichen eben ausgebildet ist und nur geringfügige Ausformungen aufweist, so z.B. für Überströmkanäle und optionale Anlaufflächen zur Bildung eines Axiallagersitzes.

Das Merkmal, wonach der Topfbodenabschnitt und der Kreiszylinderwandabschnitt genau gleiche Wanddicke aufweisen, oder wonach eine Abweichung der Wanddicken an dem Topfbodenabschnitt und an dem Kreiszylinderabschnitt bis zu einer doppelten Wanddicke beträgt, bedeutet außerdem, dass im Idealfall die Wanddicke über den gesamten Kreiszylinderwandabschnitt konstant ist und/oder die Wanddicke des Topfbodenabschnitts im Idealfall auf seiner gesamten Fläche konstant ist. Dies ist beispielsweise insbesondere dann der Fall, wenn der Topfbodenabschnitt und der Kreiszylinderwandabschnitt als ein einteiliges Bauteil aus einem flächigen Blech gleichmäßiger Blechdicke tiefgezogen oder tiefgedrückt hergestellt sind.

Allerdings können der Topfbodenabschnitt und der Kreiszylinderwandabschnitt jeweils erfindungsgemäss geringfügig abweichende Wanddicken aufweisen, ohne dass die erfindungsgemäßen Wirkungen und Vorteile verloren gehen. "Geringfügig abweichende Wanddicken" bedeutet im Rahmen der Erfindung, dass eine Abweichung der Wanddicken an dem Topfbodenabschnitt und an dem Kreiszylinderwandabschnitt bis zu einer doppelten Wanddicke beträgt.

Zumindest der Kreiszylinderwandabschnitt des Permanentmagnetenträgers oder der gesamte Permanentmagnetenträger, umfassend den Topfbodenabschnitt und den Kreiszylinderwandabschnitt, kann aus ferromagnetischem Material hergestellt sein. Hierbei ist von besonderer Relevanz, wenn zumindest der Kreiszylinderwandabschnitt des Permanentmagnetenträgers aus ferromagnetischem Material hergestellt ist, da in einem solchen Falle der Kreiszylinderwandabschnitt ein magnetisches Rückschlusseisen für die Permanentmagnete bilden kann.

Der Kreiszylinderwandabschnitt des Permanentmagnetenträgers, oder der Topfbodenabschnitt des Permanentmagnetenträgers oder der gesamte Permanentmagnetenträger, umfassend den Topfbodenabschnitt und den Kreiszylinderwandabschnitt, können demgemäß aus Edelstahl, insbesondere magnetischem Edelstahl, einem weichmagnetischem Kompositwerkstoff, einem gesinterten magnetischen Werkstoff und/oder einem weichmagnetischen Kunststoff-Compound hergestellt sein.

Der einteilige Permanentmagnetenträger kann insoweit aus einem Kompositwerkstoff bzw. Verbundwerkstoff hergestellt sein, das eine Mischung beispielsweise aus einem Kunststoff und weichmagnetischem, metallischen Pulver oder Granulat sein kann. Der Kunststoff kann ein insbesondere sortenreiner thermoplastischer Kunststoff sein und das weichmagnetische, metallische Pulver oder Granulat kann dem thermoplastische Kunststoff hinzugefügt sein, und insbesondere als ein Masterbatch zur Verfügung gestellt sein, wobei der Permanentmagnetenträger aus einem solchen Masterbatch dann beispielsweise im Kunststoff-Spritzgießverfahren hergestellt sein kann.

Der magnetische Edelstahl kann somit beispielsweise ein ferritischer Chromstahl sein. Der ferritische Chromstahl kann insbesondere ein Chromstahl der Sorte X6Cr17 (AISI 430) sein.

Der wenigstens eine Permanentmagnet kann an einer Außenumfangsmantelwand des Kreiszylinderwandabschnitts des Permanentmagnetenträgers mittels einer Klebeverbindung befestigt sein.

Eine Klebeverbindung zeichnet sich dabei insbesondere dadurch aus, dass zwischen der einer Außenumfangsmantelwand des Kreiszylinderwandabschnitts des Permanentmagnetenträgers und den der Außenumfangsmantelwand zugewandten Magnetwand oder Magnetwänden des wenigstens einen Permanentmagneten eine Klebstoffschicht eingebracht ist, welche die Magnetwand oder Magnetwänden des wenigstens einen Permanentmagneten mit der Außenumfangsmantelwand des Kreiszylinderwandabschnitts des Permanentmagnetenträgers verbindet.

Der Permanentmagnetenrotor kann mehrere gleichmäßig über einen Umfang verteilt angeordnete Einzelpermanentmagnete, insbesondere Kreisbogenpermanentmagnete aufweisen, die mittels einer Klebeverbindung mit der Außenumfangsmantelwand des Kreiszylinderwandabschnitts des Permanentmagnetenträgers befestigt sind.

Die Einzelpermanentmagnete, insbesondere Kreisbogenpermanentmagnete können dabei insbesondere in radialen Richtungen magnetisiert sein, d.h. die Magnetfeldlinien der Einzelpermanentmagnete, insbesondere Kreisbogenpermanentmagnete verlaufen konzentriert vorzugsweise in radialen Richtungen.

Der Permanentmagnetenrotor kann einen einzelnen, mehrere magnetische Polpaare aufweisenden Ringpermanentmagnet aufweisen, der mittels einer Klebeverbindung mit der Außenumfangsmantelwand des Kreiszylinderwandabschnitts des Permanentmagnetenträgers befestigt ist.

Der wenigstens eine Permanentmagnet kann an der Außenumfangsmantelwand des Kreiszylinderwandabschnitts des Permanentmagnetenträgers mittels einer Klebeverbindung befestigt sein, die einen magnetisch leitfähigen Klebstoff aufweist.

Der magnetisch leitfähige Klebstoff kann beispielsweise von einem Klebstoffwerkstoff gebildet werden, in dem magnetisch leitfähiges, insbesondere weicheisenmagnetisches Pulver oder Granulat verteilt ist. Beispielsweise kann ein Klebstoff verwendet werden, der in bekannter Weise mit einem Pulver aus Silber angereichert ist, der üblicher Weise als eine elektrisch leitfähige Klebstoffmasse Anwendung findet.

Der Kreiszylinderwandabschnitt des Permanentmagnetenträgers kann eine Innenmantelwand aufweisen, welche die Motorwelle koaxial umgibt und einen Hohlraum zwischen dem Permanentmagnetenträger und der Motorwelle begrenzt, in welchen Hohlraum sich eine Lagerbuchse der Lagerung hinein erstreckt.

Demgemäß kann der Kreiszylinderwandabschnitt des Permanentmagnetenträgers die Lagerung zumindest teilweise, vorzugsweise überwiegend oder insbesondere vollständig von außen umgeben. Der Kreiszylinderwandabschnitt des Permanentmagnetenträgers kann dabei eine kreiszylindrische Innenmantelwand aufweisen, die den Hohlraum begrenzt, in dem die Lagerung zumindest teilweise, vorzugsweise überwiegend oder insbesondere vollständig liegt. Der Topfbodenabschnitt kann eine annähernd kreisscheibenförmige Grundform aufweisen, derart, dass der Topfbodenabschnitt einerseits in seinem Zentrum an dem zweiten axialen Endabschnitt der Motorwelle befestigt ist und andererseits an seinem Außenumfangsbereich den sich anschließenden Kreiszylinderwandabschnitt des Permanentmagnetenträgers aufweist.

Der Topfbodenabschnitt des Permanentmagnetenträgers kann eine Innenbodenwand aufweisen, die eine Axiallagerfläche bildet, die zur axialen Abstützung der Motorwelle an einer Stirnwand der Lagerbuchse der Lagerung unmittelbar anläuft. Dazu kann die Innenbodenwand des Topfbodenabschnitts geringfügig ausgeformt und/oder oberflächenbehandelt sein. Die Innenbodenwand des Topfbodenabschnitts kann in seiner Größe, Gestalt und/oder Oberflächenbeschaffenheit an die Oberfläche der Stirnwand der Lagerbuchse angepasst d.h. abgestimmt sein, insbesondere um eine weitgehend reibungsfreie Drehung der Motorwelle auch dann zu gewährleisten, denn der Topfbodenabschnitt des Permanentmagnetenträgers an der Lagerbuchse aufläuft.

Die Pumpenkammerwand kann topfförmig mit einem Pumpenkammerwand-Topfboden ausgebildet sein und der Pumpenkammerwand-Topfboden kann dabei eine der Stirnseite des zweiten axialen Endabschnitts der Motorwelle zugewandte Anlauffläche aufweisen, die ausgebildet ist, zum Abstützen der Motorwelle in einer zur Lagerungsrichtung des Axiallagers der Lagerung entgegengesetzten Richtung.

Die Anlauffläche wirkt insoweit in einer entgegengesetzten axialen Richtung, als das Axiallager der Nassläufer-Pumpe.

Der Topfbodenabschnitt des Permanentmagnetenträgers kann mittels eines Pressverbindungssitzes oder einer Schweißverbindung mit der Motorwelle verbunden sein. Dadurch wird die Motorwelle drehfest mit dem Permanentmagnetenträger verbunden.

An der Innenbodenwand des Topfbodenabschnitts des Permanentmagnetenträgers ist erfindungsgemäss wenigstens ein sich radial erstreckender Kanal angeordnet, und der Topfbodenabschnitt weist dabei erfindungsgemäss eine Nabe auf, in der die Motorwelle aufgenommen ist, wobei an der Nabeninnenwand der Nabe wenigstens eine Nut eingebracht ist, die zur Bildung eines Flüssigkeits-Überströmkanals strömungstechnisch mit dem wenigstens einen Kanal verbunden ist, derart, dass eine, dem Nassraum der Nassläufer-Pumpe, die den elektrischen Antriebsmotor aufweist, befindliche Flüssigkeit zwischen der einen Axialseite des Permanentmagnetenträgers und der anderen Axialseite des Permanentmagnetenträgers überströmen kann.

Jeder Kanal kann durch eine vertiefende Umformung oder Ausfräsung in der Bodenwand des Topfbodenabschnitts des Permanentmagnetenträgers gebildet werden. Jeder Kanal kann sich insbesondere in einer radialen Richtung von der Nabe des Permanentmagnetenträgers ausgehend radial nach außen erstrecken. Die wenigstens eine Nut an der Nabeninnenwand der Nabe kann jeweils von einer sich in axialer Richtung in der Nabeninnenwand der Nabe vertiefenden Rille oder Kerbe gebildet werden, die sich über die gesamte Dicke der Nabe, d.h. die gesamte Dicke des Topfbodenabschnitts des Permanentmagnetenträgers erstreckt. Die wenigstens eine Nut geht in den wenigstens einen Kanal über, derart, dass die Nut und der Kanal strömungstechnisch miteinander verbunden sind. Bei mehreren Kanälen und Nuten kann jeweils einem einzelnen Kanal genau eine Nut zugeordnet sein.

Der Topfbodenabschnitt des Permanentmagnetenträgers kann zusammen mit dem Kreiszylinderwandabschnitt des Permanentmagnetenträgers durch spanende Bearbeitung, durch Sintern, durch Gießen, durch Tiefziehen und/oder Tiefdrücken als ein einteiliges Bauteil hergestellt sein.

Der Topfbodenabschnitt des Permanentmagnetenträgers kann zusammen mit dem Kreiszylinderwandabschnitt des Permanentmagnetenträgers als ein einteiliges Bauteil hergestellt sein, indem der Kreiszylinderwandabschnitt aus einem Rohrabschnitt eines ersten Halbzeuges gebildet wird und der Topfbodenabschnitt aus einer gestanzten Kreisscheibe eines im Wesentlichen plattenförmigen zweiten Halbzeuges gebildet wird, und der Rohrabschnitt mit der Kreisscheibe durch Schweißen oder Löten zu dem einteiligen Bauteil verbunden ist.

Die Motorwelle kann generell mittels einer Lagerung innerhalb des Nassraumes drehbar gelagert sein, welche die Motorwelle an einem axial zwischen dem ersten Endabschnitt der Motorwelle und dem zweiten Endabschnitt der Motorwelle angeordneten Zwischenabschnitt der Motorwelle trägt. Dies bedeutet insbesondere, dass die in dem Zwischenabschnitt der Motorwelle angeordnete Lagerung die einzige Lagerung ist, welche die Motorwelle innerhalb des Nassraumes drehbar lagert. Die Motorwelle wird demgemäß ausschließlich durch diese einzige Lagerung, welche die Motorwelle an seinem Zwischenabschnitt trägt, gegenüber dem Pumpengehäuse drehbar geführt und drehbar gelagert. Der Permanentmagnetenrotor ist insoweit nur einseitig gelagert.

Die Lagerung kann ein einziges Radial-Gleitlager aufweisen, das ausgebildet ist, den Zwischenabschnitt der Motorwelle drehbar zu lagern, und ein einziges Axiallager aufweist, das ausgebildet ist, die Motorwelle in einer einzigen axialen Richtung abzustützen.

Durch das Radial-Gleitlager ist die Motorwelle in einer exakten koaxialen Position zur Pumpenkammerwand und dem Stator festgelegt. Die Lagerung umfängt dazu den Zwischenabschnitt der Motorwelle vollständig. Aufgrund der Funktion des Pumpenrades wird bei der Drehung des Pumpenrades und damit bei der Drehung der Motorwelle durch das in dem Fördermedium innerhalb des Nassraumes angeordneten Pumpenrades eine axiale Kraft in eine axiale Richtung auf die Motorwelle eingeleitet. Diese axiale Kraft in eine axiale Richtung wird durch das Axiallager aufgenommen.

Die Lagerung kann ein mit der Pumpenkammerwand fest verbundenes Lagerschild aufweisen, das einen Lagersitz trägt, an dem eine Lagerbuchse ausgebildet ist, welche eine Nabe umfasst, in welcher der Zwischenabschnitt der Motorwelle drehbar gelagert ist.

Das Lagerschild kann als ein von der Pumpenkammerwand und/oder von dem Pumpengehäuse separates Bauteil ausgebildet sein, wobei das Lagerschild in einen kreiszylindrischen Innensitz eingesetzt, insbesondere eingepresst sein kann. Das Lagerschild kann insoweit als ein separates Bauteil mit der Pumpenkammerwand fest verbunden sein.

Der Lagersitz kann von einer kreiszylindrischen und/oder topfförmigen Aufnahme gebildet werden, in welche die insbesondere separat ausgebildet Lagerbuchse eingesetzt ist. Alternativ kann die Lagerbuchse gegebenenfalls auch einteilig mit dem Lagersitz und/oder dem Lagerschild ausgebildet sein. Die Lagerbuchse weist dabei die Nabe auf, oder anders ausgedrückt, kann die Nabe von der Lagerbuchse gebildet werden. In der Lagerbuchse bzw. in der Nabe läuft die Motorwelle und zwar gelagert an ihrem Zwischenabschnitt in der Nabe.

Die Nassläufer-Pumpe kann ein Pumpengehäuse aufweisen, an dem die Pumpenkammerwand und das Lagerschild starr befestigt sind, wobei die Pumpenkammerwand eine kreiszylindrische Mantelwand aufweist und der Lagersitz konzentrisch zur kreiszylindrischen Mantelwand der Pumpenkammerwand innerhalb der Nasskammer angeordnet ist.

Das Pumpengehäuse oder ein Gehäuseteil eines mehrteiligen Pumpengehäuses kann die Pumpenkammerwand aufweisen. Die kann bedeuten, dass die Pumpenkammerwand als ein separates Bauteil an dem Pumpengehäuse oder dem Gehäuseteil befestigt ist. Alternativ kann dies bedeuten, dass die Pumpenkammerwand einteilig mit dem Pumpengehäuse oder mit dem Gehäuseteil ausgebildet ist. Im Bereich des Stators und des Permanentmagnetenrotors kann die Wandstärke der Pumpenkammerwand besonders gering ausgeführt sein. Die Pumpenkammerwand erstreckt sich dabei insoweit durch den Ringspalt, welcher den Stator von dem Permanentmagnetenrotor trennt und in dem das magnetische Feld des elektrischen Antriebsmotors funktionsgemäß wirkt.

Der Lagersitz des Lagerschilds kann eine kreiszylindrische Innenwand aufweisen und die Lagerbuchse kann dabei eine zur kreiszylindrischen Innenwand des Lagerschilds korrespondierende kreiszylindrische Außenmantelwand aufweisen, die derart ausgebildet ist, dass die Lagerbuchse passgenau in den Lagersitz eingefügt ist.

Das Lagerschild kann eine Zwischenwand bilden, welche einen ersten Teilraum des Nassraums, in dem der Permanentmagnetenträger angeordnet ist, von einem zweiten Teilraum des Nassraums, in dem das Pumpenrad angeordnet ist, separiert. Insoweit sind sowohl der erste Teilraum, als auch der zweite Teilraum von dem Fördermedium durchströmt. Dazu kann das Lagerschild entsprechende Überströmöffnungen aufweisen, über die Fördermedium aus dem ersten Teilraum in den zweiten Teilraum übertreten kann. In gleicher Weise kann das Lagerschild entsprechende Überströmöffnungen aufweisen, über die Fördermedium aus dem zweiten Teilraum in den ersten Teilraum übertreten kann.

Bevorzugt weist die erfindungsgemässe Nassläufer-Pumpe eine Pumpenkammerwand auf, die den Nassraum der Nassläufer-Pumpe begrenzt, sowie ein im Nassraum drehbar gelagertes Pumpenrad.

Die Aufgabe wird außerdem gelöst durch ein Haushaltsgerät, insbesondere Geschirrspülmaschine oder Waschmaschine, aufweisend eine Nassläufer-Pumpe mit einem Pumpenrad und einem elektrischen Antriebsmotor nach einer Ausführung oder nach einer Kombination mehrerer Ausführungen, wie beschrieben.

Konkrete Ausführungsbeispiele eines erfindungsgemäßen elektrischen Antriebsmotors sind am Beispiel einer Nassläufer-Pumpe, die einen solchen elektrischen Antriebsmotor aufweist, in der nachfolgenden Beschreibung unter Bezugnahme auf die beigefügten Figuren näher erläutert.

Es zeigen:
- Fig. 1: eine perspektivische Darstellung einer beispielhaften Nassläufer-Pumpe eines Haushaltsgeräts in Art einer Geschirrspülmaschine, die ein Pumpenrad und einen elektrischen Antriebsmotor aufweist;
- Fig. 2: eine Schnittdarstellung einer erfindungsgemäßen Nassläufer-Pumpe mit einem elektrischen Antriebsmotor;
- Fig. 3: eine explodierte Darstellung einer ersten beispielhaften Ausführungsform eines erfindungsgemäßen Permanentmagnetenrotors des elektrischen Antriebsmotors gemäß Fig. 2;
- Fig. 4: eine explodierte Darstellung einer zweiten beispielhaften Ausführungsform eines erfindungsgemäßen Permanentmagnetenrotors des elektrischen Antriebsmotors gemäß Fig. 2;
- Fig. 5: eine Seitenansicht, eine Schnittansicht und eine axiale Draufsicht auf den Permanentmagnetenträger des elektrischen Antriebsmotors gemäß Fig. 2; und
- Fig. 6: eine axiale Draufsicht, eine Längsschnittansicht und eine Querschnittansicht auf eine beispielhafte Zusammenstellung von Motorwelle, Permanentmagnetenträger und Permanentmagnet.

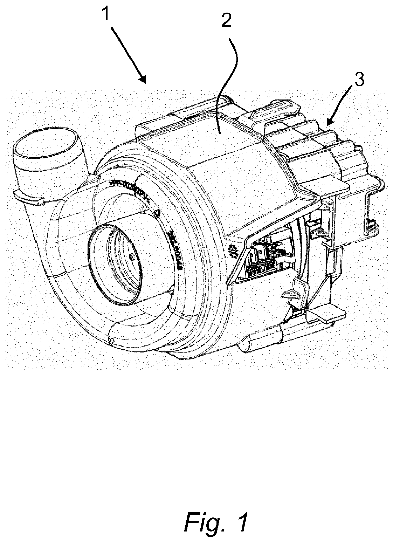

Die Fig. 1 bis Fig. 6 zeigen Bauteile zweier Ausführungsbeispiele einer Nassläufer-Pumpe 1 eines beispielhaften Haushaltsgeräts bspw. einer Geschirrspülmaschine. Die Nassläufer-Pumpe 1 umfasst ein Pumpengehäuse 2 und einen elektrischen Antriebsmotor 3.

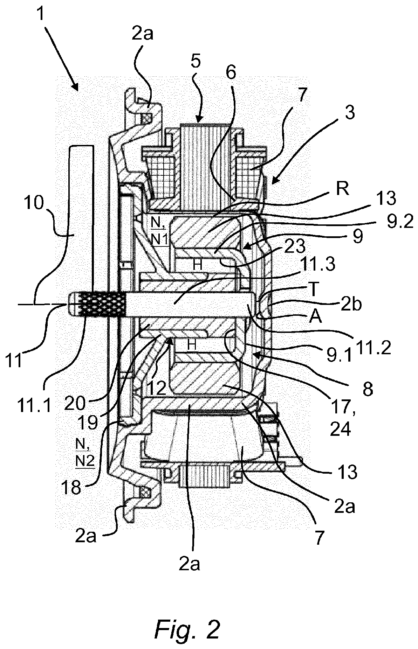

Wie insbesondere in Fig. 2 dargestellt ist, weist die Nassläufer-Pumpe 1 eine Pumpenkammerwand 2a auf, die einen Nassraum N der Nassläufer-Pumpe 1 begrenzt, ein im Nassraum N drehbar gelagertes Pumpenrad 10 und einen das Pumpenrad 10 antreibenden elektrischen Antriebsmotor 3, der einen außerhalb des Nassraumes N angeordneten Stator 5 mit Polschuhen 6 und wenigstens einer elektrisch ansteuerbaren Statorwicklung 7 aufweist, und der einen im Feld der Statorwicklung 7 unter Belassen eines Ringspaltes R drehantreibbar innerhalb des Nassraumes N gelagerten Permanentmagnetenrotor 8 aufweist.

Der Permanentmagnetenrotor 8 umfasst eine Motorwelle 11, auf der sowohl ein Permanentmagnetenträger 9 des Permanentmagnetenrotors 8, als auch das Pumpenrad 10 befestigt sind, wobei das Pumpenrad 10 an einem ersten axialen Endabschnitt 11.1 der Motorwelle 11 befestigt ist und der Permanentmagnetenträger 9 an einem dem ersten Endabschnitt 11.1 der Motorwelle 11 gegenüberliegenden zweiten axialen Endabschnitt 11.2 der Motorwelle 11 befestigt ist.

Die Motorwelle 11 ist mittels einer Lagerung 12 innerhalb des Nassraumes N drehbar gelagert, welche Lagerung 12 die Motorwelle 11 an einem axial zwischen dem ersten Endabschnitt 11.1 der Motorwelle 11 und dem zweiten Endabschnitt 11.2 der Motorwelle 11 angeordneten Zwischenabschnitt 11.3 der Motorwelle 11 trägt.

Ein Lagersitz 19 eines Lagerschilds 18 weist im Falle des vorliegenden Ausführungsbeispiels eine kreiszylindrische Innenwand auf und eine Lagerbuchse 20 weist eine zur kreiszylindrischen Innenwand des Lagerschilds 18 korrespondierende kreiszylindrische Außenmantelwand auf, die wie dargestellt derart ausgebildet ist, dass die Lagerbuchse 20 passgenau in den Lagersitz 19 eingefügt ist.

Das Lagerschild 18 bildet eine Zwischenwand, welche einen ersten Teilraum N1 des Nassraums N, in dem der Permanentmagnetenträger 8 angeordnet ist, von einem zweiten Teilraum N2 des Nassraums N, in dem das Pumpenrad 10 angeordnet ist, separiert.

Der Permanentmagnetenträger 9 ist topfförmig ausgebildet, derart, dass der Permanentmagnetenträger 9 einen Topfbodenabschnitt 9.1 aufweist, über den der Permanentmagnetenträger 9 an dem zweiten axialen Endabschnitt der Motorwelle 11 befestigt ist und der Permanentmagnetenträger 9 einen sich an den Topfbodenabschnitt 9.1 anschließenden, die Motorwelle 11 koaxial umgebenden Kreiszylinderwandabschnitt 9.2 aufweist, der einen Hohlraum H des Permanentmagnetenträgers 9 begrenzt, in welchen Hohlraum H sich die Lagerung 12 hinein erstreckt.

Der Permanentmagnetenträger 9 trägt den wenigstens einen Permanentmagneten 13 und ist an einem dem ersten Endabschnitt 11.1 der Motorwelle 11 gegenüberliegenden zweiten axialen Endabschnitt 11.2 der Motorwelle 11 befestigt. Die Motorwelle 11 ist mittels der Lagerung 12 innerhalb des Nassraumes N drehbar gelagert, wobei der Permanentmagnetenträger 9 topfförmig ausgebildet ist mit einem an dem zweiten axialen Endabschnitt 11.2 der Motorwelle 11 befestigten, sich zumindest im Wesentlichen radial zur Motorwelle 11 erstreckenden Topfbodenabschnitt 9.1 und einen sich am Außenumfang des Topfbodenabschnitts 9.1 unmittelbar anschließenden, die Motorwelle 11 koaxial umgebenden Kreiszylinderwandabschnitt 9.2, wobei der Topfbodenabschnitt 9.1 und der Kreiszylinderwandabschnitt 9.2 eine zumindest annähernd gleiche oder genau gleiche Wanddicke aufweisen.

Zumindest der Kreiszylinderwandabschnitt 9.2 des Permanentmagnetenträgers 9 oder der gesamte Permanentmagnetenträger 9, umfassend den Topfbodenabschnitt 9.1 und den Kreiszylinderwandabschnitt 9.2, sind aus ferromagnetischem Material hergestellt.

Der Kreiszylinderwandabschnitt 9.2 des Permanentmagnetenträgers 9, oder der Topfbodenabschnitt 9.1 des Permanentmagnetenträgers 9 oder der gesamte Permanentmagnetenträger 9, umfassend den Topfbodenabschnitt 9.1 und den Kreiszylinderwandabschnitt 9.2, können aus Edelstahl, insbesondere magnetischem Edelstahl, einem weichmagnetischem Kompositwerkstoff, einem gesinterten magnetischen Werkstoff und/oder einem weichmagnetischen Kunststoff-Compound hergestellt sein.

Der wenigstens eine Permanentmagnet 13 ist an einer Außenumfangsmantelwand des Kreiszylinderwandabschnitts 9.2 des Permanentmagnetenträgers 9 mittels einer Klebeverbindung befestigt.

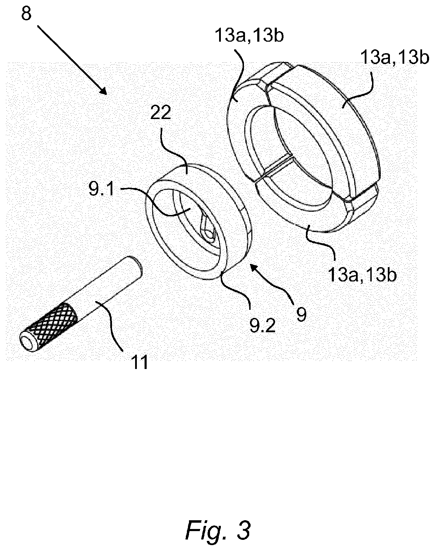

Gemäß der Ausführungsform nach Fig. 3 weist der Permanentmagnetenrotor 8 mehrere gleichmäßig über einen Umfang verteilt angeordnete Einzelpermanentmagnete 13a, insbesondere Kreisbogenpermanentmagnete 13b auf, die mittels einer Klebeverbindung mit der Außenumfangsmantelwand 22 des Kreiszylinderwandabschnitts 9.2 des Permanentmagnetenträgers 9 befestigt sind.

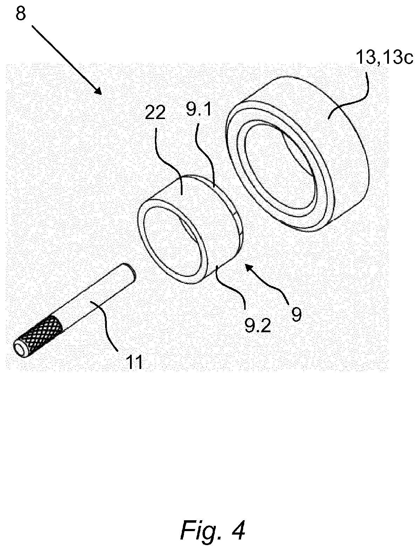

Gemäß der alternativen Ausführungsform nach Fig. 4 weist der Permanentmagnetenrotor 8 einen einzelnen, mehrere magnetische Polpaare aufweisenden Ringpermanentmagnet 13c auf, der mittels einer Klebeverbindung mit der Außenumfangsmantelwand 22 des Kreiszylinderwandabschnitts 9.2 des Permanentmagnetenträgers 9 befestigt ist.

Der wenigstens eine Permanentmagnet 13 ist demgemäß an der Außenumfangsmantelwand 22 des Kreiszylinderwandabschnitts 9.2 des Permanentmagnetenträgers 9 mittels einer Klebeverbindung befestigt, die insbesondere einen magnetisch leitfähigen Klebstoff aufweist.

Zurückkommend auf Fig. 2 ist dargestellt, dass der Kreiszylinderwandabschnitt 9.2 des Permanentmagnetenträgers 9 eine Innenmantelwand 23 aufweist, welche die Motorwelle 11 koaxial umgibt und einen Hohlraum H zwischen dem Permanentmagnetenträger 9 und der Motorwelle 11 begrenzt, in welchen Hohlraum H sich die Lagerbuchse 20 der Lagerung 12 hinein erstreckt.

Der Topfbodenabschnitt 9.1 des Permanentmagnetenträgers 9 weist außerdem eine Innenbodenwand 24 auf, die eine Axiallagerfläche bildet, die zur axialen Abstützung der Motorwelle 11 an einer Stirnwand der Lagerbuchse 20 der Lagerung 12 unmittelbar anläuft. Außerdem ist die Pumpenkammerwand 2a auch topfförmig mit einem Pumpenkammerwand-Topfboden 2b ausgebildet, wobei der Pumpenkammerwand-Topfboden 2b eine der Stirnseite T des zweiten axialen Endabschnitts 11.2 der Motorwelle 11 zugewandte Anlauffläche A aufweist, die ausgebildet ist, zum Abstützen der Motorwelle 11 in einer zur Lagerungsrichtung des Axiallagers 17 bzw. der Axiallagerfläche der Innenbodenwand 24 entgegengesetzten Richtung.

Der Topfbodenabschnitt 9.1 des Permanentmagnetenträgers 9 ist mittels eines Pressverbindungssitzes oder einer Schweißverbindung mit der Motorwelle 11 verbunden.

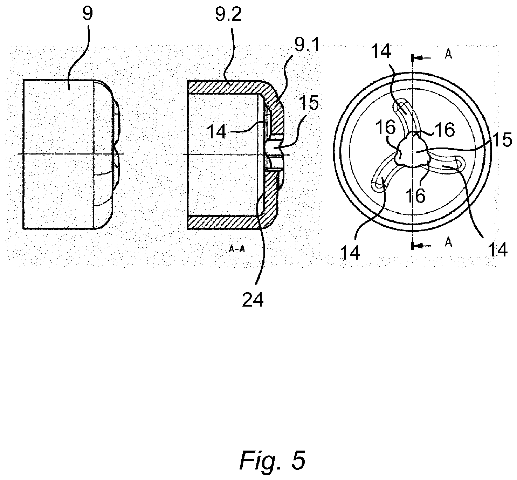

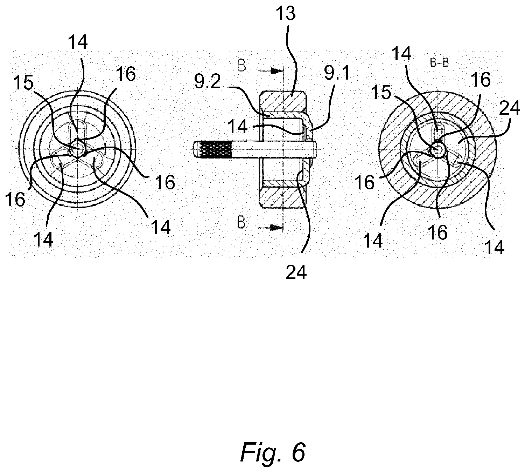

Wie insbesondere in Fig. 5 und Fig. 6 ersichtlich, sind an der Innenbodenwand 24 des Topfbodenabschnitts 9.1 des Permanentmagnetenträgers 9 im Falle der dargestellten Ausführungsbeispiel drei sich radial erstreckende Kanäle 14 angeordnet, und der Topfbodenabschnitt 9.1 weist eine Nabe 15 auf, in der die Motorwelle 11 aufgenommen ist, wobei an der Nabeninnenwand der Nabe 15 im Falle der dargestellten Ausführungsbeispiel drei Nuten 16 eingebracht ist, die zur Bildung von Flüssigkeits-Überströmkanälen strömungstechnisch mit dem den Kanälen 14 verbunden sind, derart, dass die im Nassraum N befindliche Flüssigkeit zwischen der einen Axialseite des Permanentmagnetenträgers 9 und der anderen Axialseite des Permanentmagnetenträgers 9 überströmen kann.

In der Fig. 6 sind die Kanäle 14 derart ausgerichtet, dass sie sich in radialen Richtungen von der Nabe 15 nach außen wegerstrecken. Die Kanäle 14 sind in diesem Falle gerade verlaufend ausgebildet. Im Gegensatz zu Fig. 6 sind die Kanäle 14 gemäß Fig. 5 hingegen derart ausgerichtet, dass sie sich zwar von der Nabe 15 nach außen wegerstrecken. Allerdings sind die Kanäle 14 im Falle der Ausführung gemäß Fig. 5 nicht gerade verlaufend ausgebildet, sondern gebogen verlaufend ausgebildet. Der gebogene Verlauf der Kanäle 14 kann gemäß Fig. 5 derart sein, dass in der Draufsicht, wie in Fig. 5 links gezeigt ist, die Kanäle sich in dieser senkrecht zur Drehachse stehenden Ebene wie dargestellt erstrecken und in dieser Ebene eine Kurve oder einen Bogen beschreiben. Ein bogenförmiger Verlauf der Kanäle 14 kann zu einer Geräuschreduzieren bei der Drehung des Permanentmagnetenrotors 8 beitragen.

Der Topfbodenabschnitt 9.1 des Permanentmagnetenträgers 9 ist, wie dargestellt, zusammen mit dem Kreiszylinderwandabschnitt 9.2 des Permanentmagnetenträgers 9 beispielsweise durch spanende Bearbeitung, durch Sintern, durch Gießen, durch Tiefziehen und/oder Tiefdrücken als ein einteiliges Bauteil hergestellt.

Der Topfbodenabschnitt 9.1 des Permanentmagnetenträgers 9 kann aber auch zusammen mit dem Kreiszylinderwandabschnitt 9.2 des Permanentmagnetenträgers 9 als ein einteiliges Bauteil hergestellt sein, indem der Kreiszylinderwandabschnitt 9.2 aus einem Rohrabschnitt eines ersten Halbzeuges gebildet wird und der Topfbodenabschnitt 9.1 aus einer gestanzten Kreisscheibe eines im Wesentlichen plattenförmigen zweiten Halbzeuges gebildet wird, und der Rohrabschnitt mit der Kreisscheibe durch Schweißen oder Löten zu dem einteiligen Bauteil verbunden ist.

### BEZUGSZEICHENLISTE

- 1: Nassläufer-Pumpe
- 2: Pumpengehäuse
- 2a: Pumpenkammerwand
- 2b: Pumpenkammerwand-Topfboden
- 3: elektrischer Antriebsmotor
- 5: Stator
- 6: Polschuhe
- 7: Statorwicklung
- 8: Permanentmagnetenrotor
- 9: Permanentmagnetenträger
- 9.1: Topfbodenabschnitt
- 9.2: Kreiszylinderwandabschnitt
- 10: Pumpenrad
- 11: Motorwelle
- 11.1: erster axialer Endabschnitt
- 11.2: zweiter axialer Endabschnitt
- 11.3: Zwischenabschnitt
- 12: Lagerung
- 13: Permanentmagnet
- 13a: Einzelpermanentmagnete
- 13b: Kreisbogen-Permanentmagnete
- 13c: Ringpermanentmagnet
- 14: Kanäle
- 15: Nabe
- 16: Nuten
- 17: Axiallager
- 18: Lagerschild
- 19: Lagersitz
- 20: Lagerbuchse
- 22: Außenumfangsmantelwand
- 23: Innenmantelwand
- 24: Innenbodenwand
- A: Anlauffläche
- H: Hohlraum
- N: Nassraum
- N1: erster Teilraum
- N2: zweiter Teilraum
- R: Ringspalt
- T: Stirnseite

## Patentansprüche

1. Nassläufer-Pumpe mit einem Pumpenrad (10) und mit einem elektrischen Antriebsmotor (3), der elektrische Antriebsmotor (3) aufweisend einen Permanentmagnetenrotor (8), der eine Motorwelle (11) aufweist, auf der ein Permanentmagnetenträger (9) des Permanentmagnetenrotors (8) befestigt ist, wobei ein erster axialer Endabschnitt (11.1) der Motorwelle (11) einen Sitz für ein Pumpenrad (10) aufweist und der Permanentmagnetenträger (9) wenigstens einen Permanentmagneten (13) trägt und an einem dem ersten Endabschnitt (11.1) der Motorwelle (11) gegenüberliegenden zweiten axialen Endabschnitt (11.2) der Motorwelle (11) befestigt ist und die Motorwelle (11) mittels einer Lagerung (12) drehbar gelagert ist, **dadurch gekennzeichnet, dass** der Permanentmagnetenträger (9) topfförmig ausgebildet ist mit einem an dem zweiten axialen Endabschnitt (11.2) der Motorwelle (11) befestigten, sich zumindest im Wesentlichen radial zur Motorwelle (11) erstreckenden Topfbodenabschnitt (9.1) und einem sich am Außenumfang des Topfbodenabschnitts (9.1) unmittelbar anschließenden, die Motorwelle (11) koaxial umgebenden Kreiszylinderwandabschnitt (9.2), wobei eine Abweichung der Wanddicken an dem Topfbodenabschnitt und an dem Kreiszylinderwandabschnitt (9.2) bis zu einer doppelten Wanddicke beträgt oder der Topfbodenabschnitt (9.1) und der Kreiszylinderwandabschnitt (9.2) eine genau gleiche Wanddicke aufweisen, und wobei an einer Innenbodenwand des Topfbodenabschnitts (9.1) des Permanentmagnetenträgers (9) wenigstens ein sich radial erstreckender Kanal (14) angeordnet ist, und der Topfbodenabschnitt (9.1) eine Nabe (15) aufweist, in der die Motorwelle (11) aufgenommen ist und an der Nabeninnenwand der Nabe (15) wenigstens eine Nut (16) eingebracht ist, die zur Bildung eines Flüssigkeits-Überströmkanals strömungstechnisch mit dem wenigstens einen Kanal verbunden ist, derart, dass die in einem Nassraum des elektrischen Antriebsmotors der Nassläufer-Pumpe befindliche Flüssigkeit zwischen der einen Axialseite des Permanentmagnetenträgers (9) und der anderen Axialseite des Permanentmagnetenträgers (9) überströmen kann.

2. Nassläufer-Pumpe mit einem Pumpenrad (10) und mit einem elektrischen Antriebsmotor (3) nach Anspruch 1, **dadurch gekennzeichnet, dass** zumindest der Kreiszylinderwandabschnitt (9.2) des Permanentmagnetenträgers (9) oder der gesamte Permanentmagnetenträger (9), umfassend den Topfbodenabschnitt (9.1) und den Kreiszylinderwandabschnitt (9.2), aus ferromagnetischem Material hergestellt ist.

3. Nassläufer-Pumpe mit einem Pumpenrad (10) und mit einem elektrischen Antriebsmotor (3) nach Anspruch 1, **dadurch gekennzeichnet, dass** der Kreiszylinderwandabschnitt (9.2) des Permanentmagnetenträgers (9), oder der Topfbodenabschnitt (9.1) des Permanentmagnetenträgers (9) oder der gesamte Permanentmagnetenträger (9), umfassend den Topfbodenabschnitt (9.1) und den Kreiszylinderwandabschnitt (9.2), aus Edelstahl, insbesondere magnetischem Edelstahl, einem weichmagnetischem Kompositwerkstoff, einem gesinterten magnetischen Werkstoff und/oder einem weichmagnetischen Kunststoff-Compound hergestellt ist.

4. Nassläufer-Pumpe mit einem Pumpenrad (10) und mit einem elektrischen Antriebsmotor (3) nach einem der Ansprüche 1 bis 3, **dadurch gekennzeichnet, dass** der wenigstens eine Permanentmagnet (13) an einer Außenumfangsmantelwand des Kreiszylinderwandabschnitts (9.2) des Permanentmagnetenträgers (9) mittels einer Klebeverbindung befestigt ist.

5. Nassläufer-Pumpe mit einem Pumpenrad (10) und mit einem elektrischen Antriebsmotor (3) nach Anspruch 4, **dadurch gekennzeichnet, dass** der Permanentmagnetenrotor (8) mehrere gleichmäßig über einen Umfang verteilt angeordnete Einzelpermanentmagnete (13a), insbesondere Kreisbogenpermanentmagnete (13b) aufweist, die mittels einer Klebeverbindung mit der Außenumfangsmantelwand des Kreiszylinderwandabschnitts (9.2) des Permanentmagnetenträgers (9) befestigt sind.

6. Nassläufer-Pumpe mit einem Pumpenrad (10) und mit einem elektrischen Antriebsmotor (3) nach Anspruch 4, **dadurch gekennzeichnet, dass** der Permanentmagnetenrotor (8) einen einzelnen, mehrere magnetische Polpaare aufweisenden Ringpermanentmagnet (13c) aufweist, der mittels einer Klebeverbindung mit der Außenumfangsmantelwand des Kreiszylinderwandabschnitts (9.2) des Permanentmagnetenträgers (9) befestigt ist.

7. Nassläufer-Pumpe mit einem Pumpenrad (10) und mit einem elektrischen Antriebsmotor (3) nach einem der Ansprüche 4 bis 6, **dadurch gekennzeichnet, dass** der wenigstens eine Permanentmagnet (13) an der Außenumfangsmantelwand des Kreiszylinderwandabschnitts (9.2) des Permanentmagnetenträgers (9) mittels einer Klebeverbindung befestigt ist, die einen magnetisch leitfähigen Klebstoff aufweist.

8. Nassläufer-Pumpe mit einem Pumpenrad (10) und mit einem elektrischen Antriebsmotor (3) nach einem der Ansprüche 1 bis 7, **dadurch gekennzeichnet, dass** der Kreiszylinderwandabschnitt (9.2) des Permanentmagnetenträgers (9) eine Innenmantelwand aufweist, welche die Motorwelle (11) koaxial umgibt und einen Hohlraum (H) zwischen dem Permanentmagnetenträger (9) und der Motorwelle (11) begrenzt, in welchen Hohlraum (H) sich eine Lagerbuchse (20) der Lagerung (12) hinein erstreckt.

9. Nassläufer-Pumpe mit einem Pumpenrad (10) und mit einem elektrischen Antriebsmotor (3) nach Anspruch 8, **dadurch gekennzeichnet, dass** der Topfbodenabschnitt (9.1) des Permanentmagnetenträgers (9) eine Innenbodenwand aufweist, die eine Axiallagerfläche bildet, die zur axialen Abstützung der Motorwelle (11) an einer Stirnwand der Lagerbuchse (20) der Lagerung (12) unmittelbar anläuft.

10. Nassläufer-Pumpe mit einem Pumpenrad (10) und mit einem elektrischen Antriebsmotor (3) nach einem der Ansprüche 1 bis 9, **dadurch gekennzeichnet, dass** der Topfbodenabschnitt (9.1) des Permanentmagnetenträgers (9) mittels eines Pressverbindungssitzes oder einer Schweißverbindung mit der Motorwelle (11) verbunden ist.

11. Nassläufer-Pumpe mit einem Pumpenrad (10) und mit einem elektrischen Antriebsmotor (3) nach einem der Ansprüche 1 bis 10, **dadurch gekennzeichnet, dass** der Topfbodenabschnitt (9.1) des Permanentmagnetenträgers (9) zusammen mit dem Kreiszylinderwandabschnitt (9.2) des Permanentmagnetenträgers (9) durch spanende Bearbeitung, durch Sintern, durch Gießen, durch Tiefziehen und/oder Tiefdrücken als ein einteiliges Bauteil hergestellt ist.

12. Nassläufer-Pumpe mit einem Pumpenrad (10) und mit einem elektrischen Antriebsmotor (3) nach einem der Ansprüche 1 bis 10, **dadurch gekennzeichnet, dass** der Topfbodenabschnitt (9.1) des Permanentmagnetenträgers (9) zusammen mit dem Kreiszylinderwandabschnitt (9.2) des Permanentmagnetenträgers (9) als ein einteiliges Bauteil hergestellt ist, indem der Kreiszylinderwandabschnitt (9.2) aus einem Rohrabschnitt eines ersten Halbzeuges gebildet wird und der Topfbodenabschnitt (9.1) aus einer gestanzten Kreisscheibe eines im Wesentlichen plattenförmigen zweiten Halbzeuges gebildet wird, und der Rohrabschnitt mit der Kreisscheibe durch Schweißen oder Löten zu dem einteiligen Bauteil verbunden ist.

13. Nassläufer-Pumpe mit einem Pumpenrad (10) und mit einem elektrischen Antriebsmotor (3) nach einem der Ansprüche 1 bis 12, aufweisend eine Pumpenkammerwand (2a), die den Nassraum (N) der Nassläufer-Pumpe (1) begrenzt, wobei das Pumpenrad (10) im Nassraum (N) drehbar gelagert ist.

14. Nassläufer-Pumpe mit einem Pumpenrad (10) und mit einem elektrischen Antriebsmotor (3) nach Ansprüchen 9 und 13, **dadurch gekennzeichnet, dass** die Pumpenkammerwand (2a) topfförmig mit einem Pumpenkammerwand-Topfboden (2b) ausgebildet ist und der Pumpenkammerwand-Topfboden (2b) eine der Stirnseite (T) des zweiten axialen Endabschnitts (11.2) der Motorwelle (11) zugewandte Anlauffläche (A) aufweist, die ausgebildet ist, zum Abstützen der Motorwelle (11) in einer zur Lagerungsrichtung der Axiallagerfläche (17) der Lagerung (12) entgegengesetzten Richtung.

15. Haushaltsgerät, insbesondere Geschirrspülmaschine oder Waschmaschine, aufweisend eine Nassläufer-Pumpe mit einem Pumpenrad (10) und mit einem elektrischen Antriebsmotor (3) nach einem der Ansprüche 1 bis 14.

## Claims

1. Wet-rotor pump with an impeller (10) and with an electric drive motor (3), the electric drive motor (3) having a permanent magnet rotor (8) which has a motor shaft (11) on which a permanent magnet carrier (9) of the permanent magnet rotor (8) is fastened, wherein a first axial end portion (11.1) of the motor shaft (11) has a seat for an impeller (10) and the permanent magnet carrier (9) carries at least one permanent magnet (13) and is fastened to a second axial end portion (11.2) of the motor shaft (11) opposite the first end portion (11.1) of the motor shaft (11), and the motor shaft (11) is rotatably mounted by means of a bearing (12), **characterised in that** the permanent magnet carrier (9) is pot-shaped and has a pot base portion (9.1) fastened to the second axial end portion (11.2) of the motor shaft (11) and extending at least substantially radially to the motor shaft (11), and a circular cylinder wall portion (9.2) directly adjoining the outer periphery of the pot base portion (9.1) and coaxially surrounding the motor shaft (11), wherein a deviation of the wall thickness on the pot base portion (9.1) and the circular cylinder wall portion (9.2) amounts to up to twice a wall thickness or the pot base portion (9.1) and the circular cylinder wall portion (9.2) have an exactly identical wall thickness,
and wherein at least one radially extending channel (14) is arranged on an inner base wall of the pot base portion (9.1) of the permanent magnet carrier (9), and the pot base portion (9.1) has a hub (15) in which the motor shaft (11) is received, and at least one groove (16) is incorporated on the hub inner wall of the hub (15), said groove being connected to the at least one channel in terms of flow technology to form a liquid overflow channel, such that a liquid which is located in the wet chamber of the electric drive motor of the wet rotor pump may overflow between the one axial side of the permanent magnet carrier (9) and the other axial side of the permanent magnet carrier (9).

2. Wet rotor pump with an impeller (10) and with an electric drive motor (3) according to claim 1, **characterised in that** at least the circular cylinder wall portion (9.2) of the permanent magnet carrier (9), or the entire permanent magnet carrier (9) comprising the pot base portion (9.1) and the circular cylinder wall portion (9.2), is produced from ferromagnetic material.

3. Wet rotor pump with an impeller (10) and with an electric drive motor (3) according to claim 1,**characterised in that** the circular cylinder wall portion (9.2) of the permanent magnet carrier (9), or the pot base portion (9.1) of the permanent magnet carrier (9), or the entire permanent magnet carrier (9) comprising the pot base portion (9.1) and the circular cylinder wall portion (9.2), is produced from stainless steel, in particular magnetic stainless steel, a soft magnetic composite material, a sintered magnetic material and/or a soft magnetic plastic compound.

4. Wet rotor pump with an impeller (10) and with an electric drive motor (3) according to one of claims 1 to 3, **characterised in that** the at least one permanent magnet (13) is fastened to an outer peripheral casing wall of the circular cylinder wall portion (9.2) of the permanent magnet carrier (9) by means of an adhesively bonded connection.

5. Wet rotor pump with an impeller (10) and with an electric drive motor (3) according to claim 4, **characterised in that** the permanent magnet rotor (8) has a plurality of individual permanent magnets (13a), in particular circular arc-shaped permanent magnets (13b), which are arranged so as to be distributed uniformly over a periphery and which are fastened to the outer peripheral casing wall of the circular cylinder wall portion (9.2) of the permanent magnet carrier (9) by means of an adhesively bonded connection.

6. Wet rotor pump with an impeller (10) and with an electric drive motor (3) according to claim 4, **characterised in that** the permanent magnet rotor (8) has a single annular permanent magnet (13c) which comprises a plurality of magnetic pole pairs and which is fastened to the outer peripheral casing wall of the circular cylinder wall portion (9.2) of the permanent magnet carrier (9) by means of an adhesively bonded connection.

7. Wet rotor pump with an impeller (10) and with an electric drive motor (3) according to one of claims 4 to 6, **characterised in that** the at least one permanent magnet (13) is fastened to the outer peripheral casing wall of the circular cylinder wall portion (9.2) of the permanent magnet carrier (9) by means of an adhesively bonded connection which comprises a magnetically conductive adhesive.

8. Wet rotor pump with an impeller (10) and with an electric drive motor (3) according to one of claims 1 to 7, **characterised in that** the circular cylinder wall portion (9.2) of the permanent magnet carrier (9) has an inner casing wall which coaxially surrounds the motor shaft (11) and defines a hollow space (H) between the permanent magnet carrier (9) and the motor shaft (11), a bearing bush (20) of the bearing (12) extending into said hollow space (H).

9. Wet rotor pump with an impeller (10) and with an electric drive motor (3) according to claim 8, **characterised in that** the pot base portion (9.1) of the permanent magnet carrier (9) has an inner base wall which forms an axial bearing surface which directly abuts against an end wall of the bearing bush (20) of the bearing (12) for axially supporting the motor shaft (11).

10. Wet rotor pump with an impeller (10) and with an electric drive motor (3) according to one of claims 1 to 9, **characterised in that** the pot base portion (9.1) of the permanent magnet carrier (9) is connected to the motor shaft (11) by means of a press-fit connecting seat or a welded connection.

11. Wet rotor pump with an impeller (10) and with an electric drive motor (3) according to one of claims 1 to 10, **characterised in that** the pot base portion (9.1) of the permanent magnet carrier (9) is produced together with the circular cylinder wall portion (9.2) of the permanent magnet carrier (9) as an integral component, by machining, by sintering, by casting, by deep-drawing and/or deep-pressing.

12. Wet rotor pump with an impeller (10) and with an electric drive motor (3) according to one of claims 1 to 10, **characterised in that** the pot base portion (9.1) of the permanent magnet carrier (9) is produced together with the circular cylinder wall portion (9.2) of the permanent magnet carrier (9) as an integral component, by the circular cylinder wall portion (9.2) being formed from a tubular portion of a first semi-finished product and the pot base portion (9.1) being formed from a stamped circular disk of a substantially plate-shaped second semi-finished product, and the tubular portion being connected to the circular disk by welding or soldering to the integral component.

13. Wet rotor pump with an impeller (10) and with an electric drive motor (3) according to one of claims 1 to 12, having a pump chamber wall (2a) which defines the wet chamber (N) of the wet-rotor pump (1),wherein the impeller (10) is rotatably mounted in the wet chamber (N).

14. Wet rotor pump with an impeller (10) and with an electric drive motor (3) according to claim 9 and 13, **characterised in that** the pump chamber wall (2a) is pot-shaped and has a pump chamber wall - pot base (2b) and the pump chamber wall - pot base (2b) has an abutment surface (A) which faces the front face (T) of the second axial end portion (11.2) of the motor shaft (11) and which is configured for supporting the motor shaft (11) in a direction opposing the bearing direction of the axial bearing surface (17) of the bearing (12).

15. Household appliance, in particular dishwasher or washing machine, having a wet rotor pump with an impeller (10) and with an electric drive motor (3) according to one of claims 1 to 14.

## Revendications

1. Pompe à rotor humide comprenant une roue de pompe (10) et un moteur d'entraînement électrique (3), le moteur d'entraînement électrique (3) comprenant un rotor à aimant permanent (8), qui comprend un arbre de moteur (11), sur lequel est fixé un support d'aimant permanent (9) du rotor à aimant permanent (8),
dans laquelle une première section d'extrémité axiale (11.1) de l'arbre de moteur (11) comprend un logement pour une roue de pompe (10) et le support d'aimant permanent (9) supporte au moins un aimant permanent (13) et est fixé à une deuxième section d'extrémité axiale (11.2) de l'arbre de moteur (11) opposée à la première section d'extrémité (11.1) de l'arbre de moteur (11), et
l'arbre de moteur (11) est monté à rotation au moyen d'un palier (12),
**caractérisée en ce que** le support d'aimant permanent (9) est constitué selon une forme de pot, avec une section de fond de pot (9.1) fixée à la deuxième section d'extrémité axiale (11.2) de l'arbre de moteur (11) et s'étendant au moins essentiellement radialement par rapport à l'arbre de moteur (11) et une section de paroi cylindrique circulaire (9.2) directement contiguë au pourtour extérieur de la section de fond de pot (9.1), entourant l'arbre de moteur (11) de façon coaxiale, dans laquelle un écart entre les épaisseurs de paroi au niveau de la section de fond de pot et au niveau de la section de paroi cylindrique circulaire (9.2) va jusqu'à une double épaisseur de paroi ou la section de fond de pot (9.1) et la section de paroi cylindrique circulaire (9.2) ont une épaisseur de paroi exactement égale, et
dans laquelle au moins un canal (14) s'étendant radialement est disposé sur une paroi de fond intérieure de la section de fond de pot (9.1) du support d'aimant permanent (9), et la section de fond de pot (9.1) comprend un moyeu (15), dans lequel l'arbre de moteur (11) est logé, et au moins une gorge (16) est incorporée sur la paroi intérieure de moyeu du moyeu (15), qui est reliée fluidiquement avec l'au moins un canal pour former un canal de trop-plein de fluide, de telle manière que le fluide se trouvant dans une chambre humide du moteur d'entraînement électrique de la pompe à rotor humide peut s'écouler entre un côté axial du support d'aimant permanent (9) et l'autre côté axial du support d'aimant permanent (9).

2. Pompe à rotor humide comprenant une roue de pompe (10) et un moteur d'entraînement électrique (3) selon la revendication 1, **caractérisée en ce qu'**au moins la section de paroi cylindrique circulaire (9.2) du support d'aimant permanent (9) ou le support d'aimant permanent (9) entier incluant la section de fond de pot (9.1) et la section de paroi cylindrique circulaire (9.2) est fabriqué(e) en un matériau ferromagnétique.

3. Pompe à rotor humide comprenant une roue de pompe (10) et un moteur d'entraînement électrique (3) selon la revendication 1, **caractérisée en ce que** la section de paroi cylindrique circulaire (9.2) du support d'aimant permanent (9), ou la section de fond de pot (9.1) du support d'aimant permanent (9), ou le support d'aimant permanent (9) entier incluant la section de fond de pot (9.1) et la section de paroi cylindrique circulaire (9.2) est fabriqué(e) en acier spécial, en particulier en un acier spécial magnétique, un matériau composite magnétique doux, un matériau magnétique fritté, et/ou un compound de matière plastique magnétique doux.

4. Pompe à rotor humide comprenant une roue de pompe (10) et un moteur d'entraînement électrique (3) selon l'une des revendications 1 à 3, **caractérisée en ce que** l'au moins un aimant permanent (13) est fixé à une paroi d'enveloppe périphérique extérieure de la section de paroi cylindrique circulaire (9.2) du support d'aimant permanent (9) au moyen d'une liaison par collage.

5. Pompe à rotor humide comprenant une roue de pompe (10) et un moteur d'entraînement électrique (3) selon la revendication 4, **caractérisée en ce que** le rotor à aimant permanent (8) comprend plusieurs aimants permanents individuels (13a) agencés de façon à être répartis régulièrement sur la périphérie, en particulier des aimants permanents en forme d'arcs de cercle (13b), qui sont fixés au moyen d'une liaison par collage à la paroi d'enveloppe périphérique extérieure de la section de paroi cylindrique circulaire (9.2) du support d'aimant permanent (9).

6. Pompe à rotor humide comprenant une roue de pompe (10) et un moteur d'entraînement électrique (3) selon la revendication 4, **caractérisée en ce que** le rotor à aimant permanent (8) comprend un aimant permanent annulaire unique (13c) comprenant plusieurs paires de pôles magnétiques, qui est fixé par une liaison par collage à la paroi d'enveloppe périphérique extérieure de la section de paroi cylindrique circulaire (9.2) du support d'aimant permanent (9).

7. Pompe à rotor humide comprenant une roue de pompe (10) et un moteur d'entraînement électrique (3) selon l'une des revendications 4 à 6, **caractérisée en ce que** l'au moins un aimant permanent (13) est fixé à la paroi d'enveloppe périphérique extérieure de la section de paroi cylindrique circulaire (9.2) du support d'aimant permanent (9) au moyen d'une liaison par collage, qui comprend une colle magnétiquement conductrice.

8. Pompe à rotor humide comprenant une roue de pompe (10) et un moteur d'entraînement électrique (3) selon l'une des revendications 1 à 7, **caractérisée en ce que** la section de paroi cylindrique circulaire (9.2) du support d'aimant permanent (9) comprend une paroi d'enveloppe intérieure, qui entoure l'arbre de moteur (11) de façon coaxiale et délimite un espace creux (H) entre le support d'aimant permanent (9) et l'arbre de moteur (11), à l'intérieur duquel espace creux (H) un coussinet (20) du palier (12) s'étend.

9. Pompe à rotor humide comprenant une roue de pompe (10) et un moteur d'entraînement électrique (3) selon la revendication 8, **caractérisée en ce que** la section de fond de pot (9.1) du support d'aimant permanent (9) comprend une paroi de fond intérieure, qui forme une surface de palier de butée, qui s'adosse directement contre une paroi d'extrémité du coussinet (20) du palier (12) pour supporter axialement l'arbre de moteur (11).

10. Pompe à rotor humide comprenant une roue de pompe (10) et un moteur d'entraînement électrique (3) selon l'une des revendications 1 à 9, **caractérisée en ce que** la section de fond de pot (9.1) du support d'aimant permanent (9) est reliée à l'arbre de moteur (11) au moyen d'un assemblage à ajustement serti ou d'un assemblage soudé.

11. Pompe à rotor humide comprenant une roue de pompe (10) et un moteur d'entraînement électrique (3) selon l'une des revendications 1 à 10, **caractérisée en ce que** la section de fond de pot (9.1) du support d'aimant permanent (9) est fabriquée ensemble avec la section de paroi cylindrique circulaire (9.2) du support d'aimants permanent (9) par usinage par enlèvement de copeaux, par frittage, par coulée, par emboutissage profond et/ou par pressage profond sous forme d'un composant monobloc.

12. Pompe à rotor humide comprenant une roue de pompe (10) et un moteur d'entraînement électrique (3) selon l'une des revendications 1 à 10, **caractérisée en ce que** la section de fond de pot (9.1) du support d'aimant permanent (9) est fabriquée ensemble avec la section de paroi cylindrique circulaire (9.2) du support d'aimants permanent (9) sous forme d'un composant monobloc,
en formant la section de paroi cylindrique circulaire (9.2) à partir d'une section de tube d'un premier demi-produit et en formant la section de fond de pot (9.1) à partir d'un disque circulaire estampé d'un deuxième demi-produit essentiellement en forme de plaque, et en assemblant la section de tube avec le disque circulaire par soudage ou brasage pour former une pièce monobloc.

13. Pompe à rotor humide comprenant une roue de pompe (10) et un moteur d'entraînement électrique (3) selon l'une des revendications 1 à 12, comprenant une paroi de chambre de pompage (2a), qui délimite la chambre humide (N) de la pompe à rotor humide (1), dans laquelle la roue de pompe (10) est montée à rotation dans la chambre humide (N).

14. Pompe à rotor humide comprenant une roue de pompe (10) et un moteur d'entraînement électrique (3) selon les revendications 9 et 13, **caractérisée en ce que** la paroi de chambre de pompage (2a) est configurée en forme de pot avec un fond de pot - de paroi de chambre de pompage (2b) et le fond de pot - de paroi de chambre de pompage (2b) comprend une surface de butée (A) tournée vers le côté frontal (T) de la deuxième section axiale (11.2) de l'arbre de moteur (11), qui est configurée pour supporter l'arbre de moteur (11) dans une direction opposée à une direction de palier de la surface de palier de butée (17) du palier (12).

15. Appareil électroménager, en particulier lave-vaisselle ou machine à laver comprenant une pompe à rotor humide comprenant une roue de pompe (10) et un moteur d'entraînement électrique (3) selon l'une des revendications 1 à 14.
